# EUROPEAN PATENT SPECIFICATION

(11) **EP 4 454 919 B1**
(45) Date of publication and mention of the grant of the patent: **29.04.2026**
(21) Application number: 24171836.0
(22) Date of filing: 23.04.2024
(51) Int. Cl.: B60K 7/00, B60K 1/02, B60K 17/04

(54) **IMPROVED ELECTRIC TRACTION WHEEL HUB**
VERBESSERTE ELEKTRISCHE TRIEBRADNABE
MOYEU DE ROUE DE TRACTION ÉLECTRIQUE AMÉLIORÉ

(30) Priority: 28.04.2023 IT 202300008436
(43) Date of publication of application: 30.10.2024
(73) Proprietor: IVECO S.P.A., 10156 Torino (IT)
(72) Inventor: PEREIRA DE LEMOS, Josè Francivaldo, 10156 Torino (IT); AIMO BOOT, Marco, 10156 Torino (IT); BERNARDINI, Alessandro, 10156 Torino (IT)
(74) Representative: Studio Torta S.p.A.

(56) References cited:
- EP-A1- 2 226 211
- WO-A1-2013/025096
- WO-A1-2019/131907
- WO-A1-2020/008257
- CN-A- 109 229 080
- CN-A- 111 469 644
- CN-A- 114 801 703
- US-A- 4 021 690
- US-B1- 6 328 123

## Description

### TECHNICAL FIELD

The present invention relates to a wheel hub for a vehicle axle, in particular a wheel hub with integrated electric traction for an axle of a heavy-duty vehicle.

### STATE OF THE PRIOR ART

Heavy-duty vehicles such as road transport vehicles, for example lorries, tend to be increasingly electrified to reduce their pollutant emissions. In particular, such vehicles may be hybrid vehicles or pure electric vehicles.

In particular, electric vehicles comprise at least one electric axle, i.e. an axle equipped with electric machines such as motors/generators configured to give torque to the wheel hubs to allow them to move or to recharge the vehicle's battery modules when the vehicle is braking.

However, there is always a need to improve existing electric axles in order to reduce the overall dimensions due to the presence of electric machines which nullify the vehicle's useful spaces and oblige to make modifications to the suspension systems.

A similar need is felt for rims, such that they can be optimally fitted to electric axles without compromising their structural characteristics.

Prior art arrangements are disclosed in patent publications US6328123 B1, CN109229080 A, US4021690 A, WO2019/131907 A1, EP2226211 A1, WO2013/025096 A1, CN114801703 A, CN111469644 A or WO2020/008257 A1.

The object of the present invention is to meet the above needs in an optimized and cost-effective manner.

### SUMMARY OF THE INVENTION

Said object is achieved by means of a wheel hub with integrated electric traction as claimed in the independent claim 1, an axle, and a vehicle.

### BRIEF DESCRIPTION OF THE DRAWINGS

For a better understanding of the present invention, a preferred embodiment is described below by way of non-limiting example and with reference to the accompanying drawings, wherein:
- Figure 1 is a schematic longitudinal section view of a wheel hub with integrated electric traction according to the invention showing first functional elements;
- Figure 2 is a schematic longitudinal section view of a wheel hub with integrated electric traction according to the invention showing second functional elements and the torque lines transmitted during the operation of the wheel hub according to the invention;
- Figure 3 is a partially exploded perspective view of the wheel hub in Figures 1 and 2;

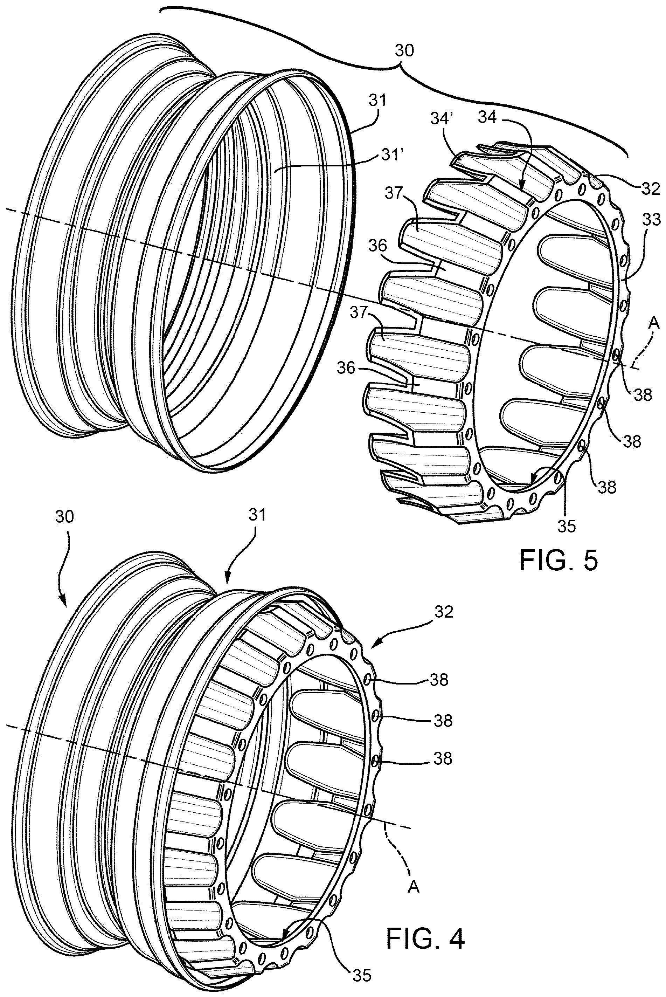

- Figure 4 is a perspective view of a rim for a wheel hub with integrated electric traction according to the invention;
- Figure 5 is an exploded perspective view of the rim in Figure 4;

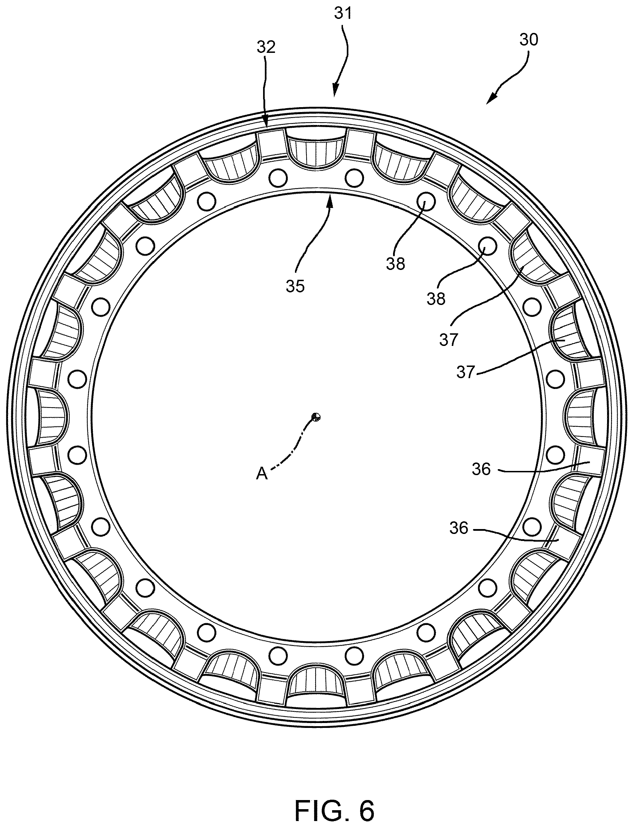

- Figure 6 is a front view of the rim in Figure 4; and
- Figure 7 is a perspective view of an axle for a wheel hub with integrated electric traction according to the invention.

### DETAILED DESCRIPTION OF THE INVENTION

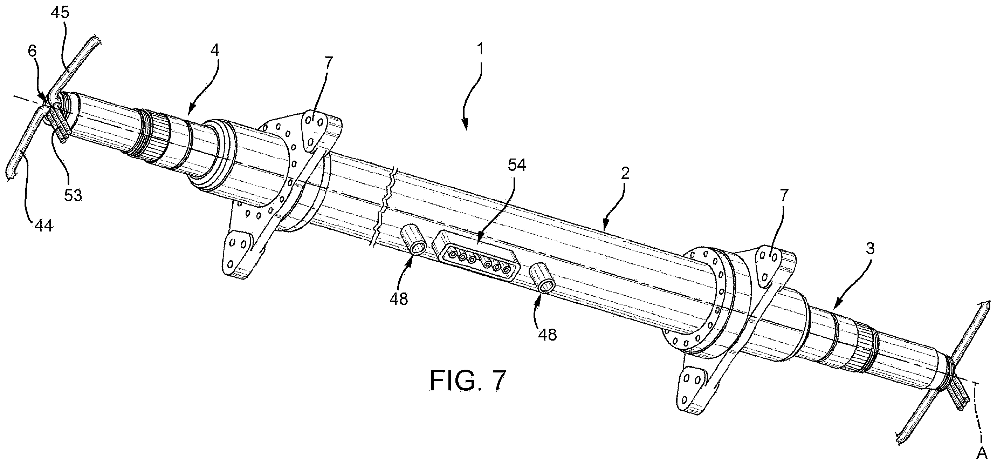

In Figure 7, the reference numeral 1 indicates, as a whole, an axle of a vehicle, preferably a heavy-duty vehicle, e.g. a lorry, not shown, essentially comprising a central portion 2 and a pair of end portions 3, 4 connected on opposite sides to the central portion 2, preferably in a rigid manner, along a longitudinal axis A of the same.

The central portion 2 is advantageously hollow so as to define a space 5 suitable for housing functional elements of the vehicle as described below. Preferably, the end portions 3, 4 are also hollow so as to define a continuous space 5 along the entire extension of the axle 1 along the axis A.

The end portions 3, 4 have openings 6 configured to allow access to the space 5 as described below.

Preferably, the axle 1 comprises at least one flange 7 arranged in the vicinity of each of the end portions 3, 4 and rigidly carried by them or, as in the case shown, by the central portion 2 and configured to support operating elements of the vehicle, such as, for example, mechanical brakes or sensor means.

The axle 1 comprises a pair of wheel hubs 10 comprising a fixed portion 8 rigidly carried by the respective end portion 3, 4 and a movable portion 9 carried in a rotationally free manner by the respective end portion 3, 4.

With regard to the wheel hubs 10, for simplicity, reference will only be made to one of them, for example the left-hand one, and the following considerations apply equally to the right-hand wheel hub, of course, the structure described herein being mirrored in relation to a longitudinal plane of the vehicle.

The fixed portion 8 is advantageously cup-shaped and comprises a radial wall 8' connected to the end of the end portion 4 and extending perpendicular to the longitudinal axis A, and a cylindrical wall 8" extending from the radial wall 8' towards the vehicle, i.e., towards the intermediate portion 2 of the axle 1.

The radial wall 8' is advantageously connected to the end of the end portion 4 via a rigid connection, such as an interference fit connection. Preferably, the radial wall 8' is made in one piece with the cylindrical wall 8".

The cylindrical wall 8" is supported, on the side opposite the radial wall 8' with respect to the movable portion 9, in a rotationally free manner by support means 11 such as rolling bearings. In the embodiment described, the cylindrical wall 8" cooperates with the support means 11 via a support element 12 rigidly connected to the cylindrical wall 8" and extending radially towards the aforementioned support means 11.

Preferably, the cylindrical wall 8" cooperates, as described above, with the movable portion 9 in a sealed manner via sealing means 13, such as rotating sealing rings, so as to delimit a space 14 isolated from the external environment, radially delimited around the axis A by the cylindrical wall 8", and axially delimited by the radial wall 8' and the movable portion 9.

The wheel hub 10 comprises, housed in the space 14, an electric machine 15 equipped with a stator 15' and a rotor 15" operatively driven by the stator 15', and a transmission 16 operatively connecting the rotor 15" to the movable portion 9 so as to vary the transmitted speed/torque compared to that originally supplied to the rotor 15".

In particular, the stator 15' is rigidly carried by the fixed portion 8, in particular by the cylindrical wall 8" and thus extends along the axis A within the space 14.

The transmission 16 is advantageously sized so as to be radially housed within the rotor 15" and particularly also axially included by the rotor 15".

In greater detail, the rotor 15" is connected to a rotor support 17 carried in a rotationally free manner with respect to the fixed portion 8, in particular with respect to the radial wall 8', i.e., to a flanged portion extending with respect thereto.

The rotor support 17 extends radially inside the rotor 15 and essentially has the shape of an annular disc housed around the end portion 4. The rotor support 17 is operatively connected via the transmission 16 to the movable portion 9.

In detail, the transmission 16 comprises a gear train, advantageously a differential gear train.

In greater detail, the transmission 16 comprises a first bevel gear wheel 21 rigidly connected to the rotor support 17 and rotationally free in relation to the end 4, a second bevel gear wheel 22 rigidly carried by the end 4, and a plurality of satellites 23 operatively cooperating with the first and second bevel gear wheels 21, 22.

The satellites 23 can be of various numbers and are supported in a rotationally free manner in relation to the plane of axis B perpendicular to the axis A via respective pins 24. By way of example only, there are four satellites 23 supported by respective pins 24 arranged crosswise in relation to one another.

Each pin 23 is rigidly carried by a carrier 25 rigidly connected to the movable portion 9.

The transmission 16 is provided with sealing means 13, e.g., carried between the first gear wheel 21 and the end 4, further configured to isolate the space 14.

In this way, the space 14 can be supplied with lubricating fluid, such as oil, via a port 26, for example carried by the rotating portion 9, in order to lubricate the transmission 16.

The movable portion 9, as mentioned above, is supported in a rotationally free manner by support means 12, such as rolling bearings, at the end 4. The embodiment described comprises a main movable portion 9' and an auxiliary movable portion 9" rigidly connected to each other.

Advantageously, the main movable portion 9' essentially comprises a main portion 9a, preferably an annular disc, cooperating with the aforementioned support means 12, and a first flanged portion 9b extending axially cantilevered along the axis A in relation to the main portion 9a and rigidly connected to the carrier 25. Accordingly, the first flanged portion 9b extends radially inside the rotor 15".

Advantageously, the main movable portion 9' comprises a second flanged portion 9c radially extending from the main portion 9a and rigidly connected to a rim 30 as described in detail below.

The auxiliary movable portion 9" extends from the side opposite the fixed portion 8 and is configured to provide support for operating elements of the vehicle, such as sensors or other elements that need to be integral with the movable portion 9.

The wheel hub 10 also comprises a conditioning system 40 configured to cool the fixed portion 8, i.e., the stator 15' connected to it. Advantageously, the conditioning system 40 is a fluid conditioning system.

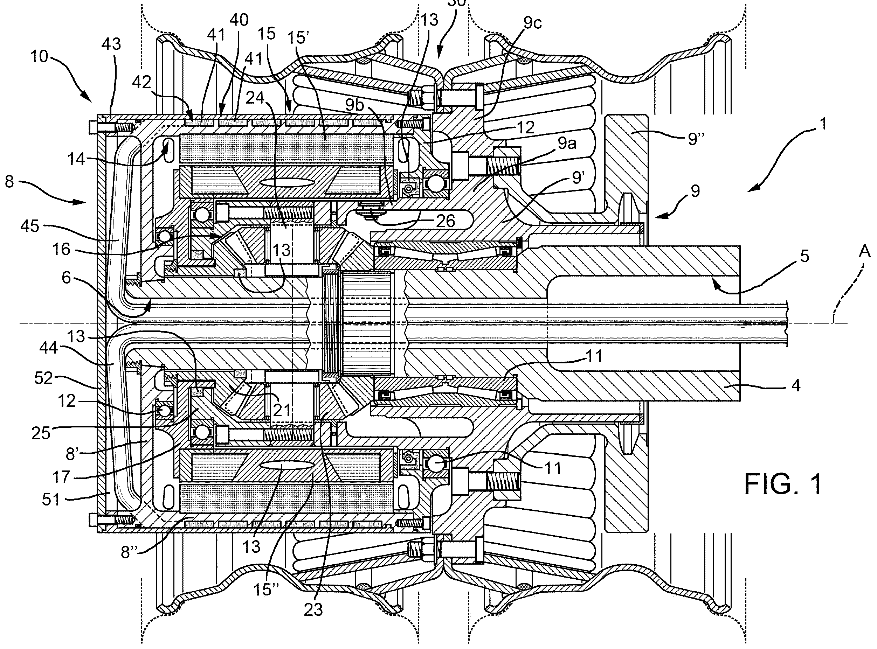

As shown in Figures 1 to 3, the conditioning system 40 comprises a plurality of ducts 41 in which a conditioning fluid flows and which are adjacent to the stator 15'. Advantageously, these ducts 41 are integrated into the fixed portion 8, i.e. the cylindrical portion 8".

Advantageously, these ducts 41 are made as grooves 42 defined radially recessed with respect to the surface opposite the space 14 of the cylindrical portion 8" and isolated from the external environment by a cover 43 rigidly carried on the cylindrical portion in a sealed manner, in order to delimit these ducts 41.

The ducts 41 are fluidically connected to a delivery pipe 44 and a return pipe 45 configured to supply the low temperature conditioning fluid and collect the high temperature conditioning fluid once it has flowed through the ducts 41 to cool the fixed portion 8.

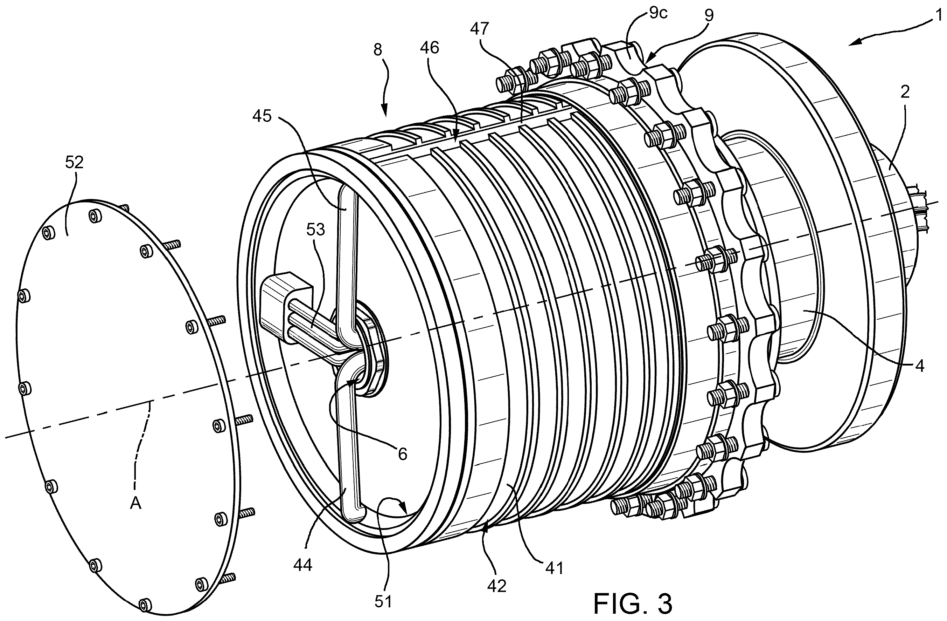

As better shown in Figure 3, the ducts 41 are substantially circumferential around the axis A and advantageously of square cross-section. In particular, they have the same size and are equally spaced along the axis A.

Advantageously, the ducts 41 are fluidically connected to the delivery pipe 44 and the return pipe 45 via respective manifolds 46, which are advantageously integrated into the fixed portion 8, i.e. the cylindrical portion 8".

Advantageously, these manifolds 46 are made as a single groove 47 defined radially recessed with respect to the surface opposite the space 14 of the cylindrical portion 8" and isolated from the external environment by the same cover 43 delimiting the ducts 41. In detail, the groove 47 extends along the axis A throughout the length of the cylindrical portion 8" in which the ducts 41 are made so that it can fluidically communicate with each of the latter.

The delivery and return pipes 44, 45 are fluidically connected to a heat exchanger system (not shown) of the vehicle such as, for example, a passive exchanger such as an air radiator, or an active device such as a coolant conditioning circuit.

Advantageously, the delivery pipes 44, 45 are housed within the space 5 and extend between respective fluidic connectors 48, as shown in Figure 7, which are configured to allow connection to additional pipes (not shown) connecting to the aforementioned heat exchanger of the vehicle. Preferably, the fluidic connectors 48 are made in the central portion 2 of the axle 1.

On the opposite side, the delivery pipes 44, 45 exit the space 5 through the opening 6 and are directed to connect to the manifolds 46 within a space 51 delimited between the fixed portion 8 and a head element 52 connected to it.

Therefore, this space 51 is radially delimited by the fixed portion 8, in particular by a flange extending between the cylindrical portion 8" and the radial portion 8' on the side opposite the cylindrical portion 8", and axially delimited by the head element 52 and the radial portion 8'.

In particular, the head element 52, in the embodiment shown, is rigidly connected to the cover 43. Clearly, in an alternative embodiment, it could be made in one piece with it.

The wheel hub 10 further comprises cables 53 for the electrical connection of the electric machine 15 to electric power storage means (not shown) such as the battery, of the vehicle.

Advantageously, the cables 53 are housed within the space 5 and extend between respective electrical connectors 54, as shown in Figure 7, which are configured to allow connection to additional cables (not shown) connecting to the aforementioned electric power storage means. Preferably, the electrical connectors 54 are made in the central portion 2 of the axle 1.

On the opposite side, the cables 43 exit the space 5 through the opening 6 into the aforementioned space 51 and pass through a dedicated sealed opening into the space 14, towards the stator 15' of the electric machine 15.

Going back to the rim 30, it comprises a rim 31 configured to cooperate with a vehicle tire, and a disc 32, which are rigidly connected to each other, for example by welding, as known per se.

In particular, the disc 32 is shaped so as to allow the wheel hub 10 to be housed inside it.

In greater detail, the disc 32 comprises a coupling portion 33, advantageously comprising an annular disc, and a structural portion 34 configured to provide adequate stiffness to the rim 30 and allow connection to the rim 31.

In detail, the structural portion 34 is rigidly connected at a connecting portion thereof 34', opposite the one connected at the coupling portion 33, to the rim 31, i.e. to an inner radial surface thereof 31'.

Advantageously, the structural portion 34 is inclined along the axis A and is shaped like a substantially frusto-conical annular disc so as to have a larger opening diameter at the rim 31 and a smaller opening diameter 35 at the coupling portion 33.

In detail, the structural portion 34 is inclined between the larger opening diameter and the smaller opening diameter 35 by a value between 15° and 25°, in particular 20°. The inclination provided allows a smaller opening diameter 35 of at least 400 mm to be obtained.

Preferably, the structural portion 34 has a corrugated profile, preferably made circumferentially to the axis A. In greater detail, this corrugated profile comprises a plurality of grooves 36 made parallel to the axis A and alternating with each other by a plurality of projections 37.

Preferably, the grooves 36 have a substantially curved cross-section, advantageously concave towards the rim 31. In greater detail, the projections 37 define a substantially flat surface with a constant cross-section between the connecting portion 34' and the coupling portion 33.

Advantageously, both the grooves 36 and the projections 37 each have the same shape as each other. In this way, preferably, they can be angularly equidistant around the axis A.

The coupling portion 33 is substantially flat and defines a plurality of openings 38, which are advantageously circumferentially equidistant with respect to the axis A to enable fastening, for example as illustrated via threaded means, to the flange 9c of the movable portion 9.

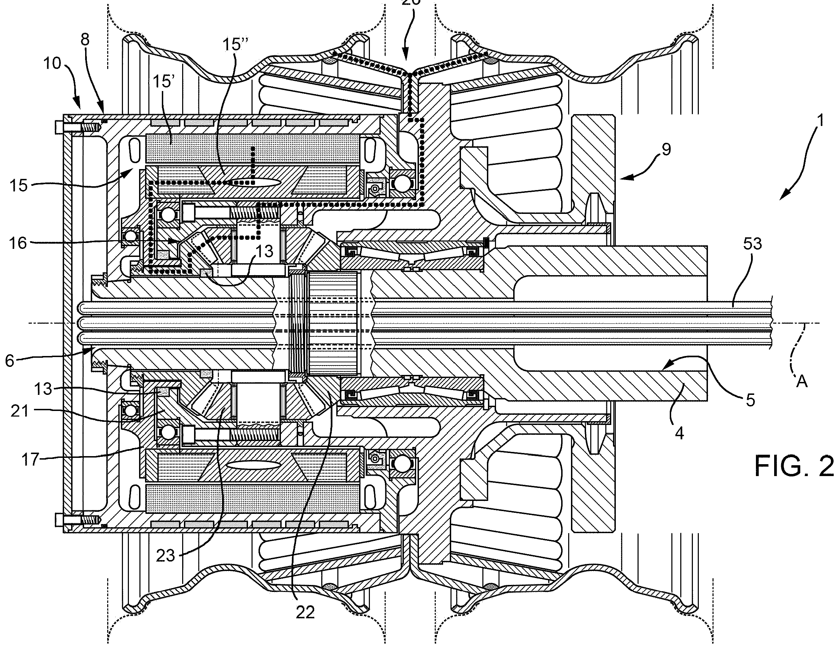

The operation of the embodiment of the wheel hub, axle and vehicle according to the invention described above is as follows, referring to the torque lines in Figure 2.

In a first, traction operating condition, the stator 15', powered by the electric cables 53 uses the electric power supplied to it to cooperate electromagnetically with the rotor 15", causing it to rotate; the latter rotates integral with the rotor holder 17, which in turn drags the gear wheel 21. The latter rotates the satellites 23, which mesh between the gear wheels 21 and 22, causing the carrier 25 to rotate by means of the pins 24. In this way, the carrier 25 drags the movable portion 9 to which it is connected which is directly connected to the rim 30 which is then rotated, thereby moving the vehicle.

In a second, regenerative operating condition, the rim 30 rotates the movable portion 9, which rotates the carrier 25 which drags, by means of the pins 24, the satellites 23 which, by meshing between the wheels 21 and 22, rotate the rotor holder 17. The latter then rotates the rotor 15" which, by interacting electromagnetically with the stator 15', generates electric power that will be stored via the electric cables 53 in the power storage means of the vehicle.

The advantages of a wheel hub, axle and vehicle according to the invention are clear from the foregoing.

The proposed structure makes it possible to provide an axle with integrated electric traction via the wheel hub with integrated electric traction which is small in overall dimensions and low in weight.

In particular, the housing of the electric machine in the wheel hub and of the transmission inside the free space of the rotor makes it possible to obtain a compact, lightweight traction system that is isolated from the external environment and therefore protected from wear and from the entry of dirt.

Furthermore, the integration of the passage of the cooling and electrical power systems within the axle and the passage of the header space allows easy and optimized assembly, thereby reducing axle manufacturing times.

Moreover, the proposed axle and wheel hub are modular and scalable according to different vehicle types and sizes.

In addition, the use of a rim as illustrated allows the wheel hub to be easily housed internally without compromising its structural properties.

Indeed, the particular inclination of the disc in addition to the corrugated conformation make it possible to obtain a high moment of inertia which allows it to support the loads acting thereon.

Furthermore, the manufacturing of the illustrated rim disc is particularly cost-effective, since it does not involve the step of cutting the holes according to the prior art.

Lastly, it is clear that modifications and variations may be made to the wheel hub, axle, and vehicle according to the present invention, without however departing from the scope of protection defined by the claims.

Obviously, as mentioned, the axle 1 and the wheel hub 10 can have different shapes and consist of more and different pieces.

Furthermore, the gear wheels and gearing described herein may vary, and elements not described but known to exist could be used for the assembly of a hub, an axle, and a vehicle according to the present invention.

In addition, although a twin wheel solution is described, the wheel hub can be applied to any type of wheel, even a single wheel.

## Claims

1. A wheel hub (10) for an axle (1) of a heavy vehicle, said wheel hub (10) comprising a fixed portion (8) configured to be rigidly carried by one end (3, 4) of said axle (1) and a movable portion (9) configured to be carried in a rotationally free manner by said end (3, 4) of said axle (1) and with respect to said fixed portion (8), said fixed portion (8) and said movable portion (9) delimiting with said end (3, 4) a space (14) isolated from the external environment, said wheel hub (10) comprising an electric machine (15) housed in said space (14) and comprising a stator (15') carried integral with said fixed portion (8) and a rotor (15") operatively connected to said movable portion (9), said wheel hub (10) comprising a transmission (16) housed in said space (14), radially inside of said rotor (15"), and connecting said rotor (15") to said movable portion (19) so as to vary the speed/torque between said rotor (15") and said movable portion (9),
wherein said movable portion (9) comprises a main portion (9a) operatively connected by said transmission (16) to said rotor (15) and supported in a rotationally free manner by said end (3, 4) of said axle (2) and a connecting portion (9c) configured to allow connection radially inside of a disc of a wheel rim (30) of said vehicle
wherein said transmission (16) comprises a first gear wheel (21) operatively connected to said rotor (15), a second gear wheel (22) and a plurality of satellites (23) meshing with said first and second gear wheels (21, 22), said plurality of satellites (23) being connected via pins (24) to a carrier (25), **characterized in that** the second gear wheel (22) is configured to be rigidly carried by said end (3, 4) of said axle (2),
the carrier (25) is operatively connected to said movable portion (9) and is integral with said movable portion (9).

2. The wheel hub according to claim 1, wherein said transmission (16) comprises a gear train.

3. The wheel hub according to claim 1 or 2, wherein said transmission (16) comprises a differential gear train.

4. The wheel hub according to one of claims from 1 to 3, wherein said rotor (15") is connected to said transmission through a rotor holder (17) carried rotationally free with respect to said fixed portion (8) and/or said end (3, 4) of said axle (2).

5. The wheel hub according to one of the preceding claims, comprising a conditioning system (40) for said electric machine (15).

6. The wheel hub according to claim 5, wherein said conditioning system (40) is a fluid conditioning system and comprises a plurality of ducts (41) adjacent to said fixed portion (8) in the vicinity of said stator (15') configured to allow the flow of a conditioning fluid towards a heat exchanger system of said vehicle.

7. The wheel hub according to claim 6, wherein said ducts (41) are integrated in said fixed portion (8).

8. The wheel hub according to claim 6 or 7, wherein said ducts (41) are made by means of grooves (42) made on an external surface of said fixed portion (8) and delimited from the external environment by a cover (43) rigidly fixed to said fixed portion (8).

9. The wheel hub according to one of claims 6 to 8, comprising a pair of manifolds (46) each fluidically connected to said ducts (41), said manifolds (46) being respectively connected to a delivery pipe (44) and a return pipe (45) fluidically connected to said heat exchanger system.

10. The wheel hub according to one of the preceding claims, wherein said fixed portion (8) defines an opening configured to allow the stator (15') to be connected, in a sealed manner, to an electric power source of said vehicle by means of electric cables (53).

11. The wheel hub according to claims 9 and 10, comprising a head element (52) rigidly connected to said fixed portion (8) so as to axially face said end portion (3, 4) of said axle (2), said head element (52) defining with said fixed portion (8) and said end portion (3, 4) a chamber (51) isolated from the external environment and from said space (14), said chamber (51) housing said delivery (44) and return (45) pipes and said electric cables (53).

12. An axle (1) extending along a longitudinal axis (A) and comprising a central portion (2) and a pair of end portions (3, 4) connected to the ends of said central portion (2) along said axis (A) and respective wheel hubs (10) according to one of the preceding claims each carried by a respective end portion (3, 4).

13. The axle according to claim 12, wherein said central and end portions (2, 3, 4) are hollow and define a space (5) which is contiguous through end openings (6) along said axis (A).

14. The axle according to claim 13, when dependent on claim 11, wherein said space (5) is fluidically connected through said openings (6) to said space (52) and allows the passage of said delivery (44) and return (45) pipes and of said electric cables (53).

15. The axle according to claim 14, wherein said central portion (2) defines fluidic connectors (48) and electrical connectors (54) configured to connect, respectively, said delivery (44) and return (45) pipes and said electric cables (53) to said heat exchanger system and said electric power source of said vehicle.

16. A vehicle comprising an axle (1) according to one of claims 11 to 15.

17. The vehicle according to claim 16, comprising an electric power source electrically connected by means of electric cables (53) to said stator (15') of said electric machine (15) of said wheel hub (10).

18. The vehicle according to claim 16 or 17, when dependent on claims from 6 to 9, comprising a heat exchanger system fluidically connected to said conditioning system (40) of said wheel hub (10).

## Patentansprüche

1. Radnabe (10) für eine Achse (1) eines Schwerfahrzeugs, wobei die Radnabe (10) einen festen Abschnitt (8), der konfiguriert ist, um starr von einem Ende (3, 4) der Achse (1) getragen zu werden, und einen beweglichen Abschnitt (9), der konfiguriert ist, um in einer frei drehbaren Weise von dem Ende (3, 4) der Achse (1) und in Bezug auf den festen Abschnitt (8) getragen zu werden, umfasst, wobei der feste Abschnittsabschnitt (8) und der bewegliche Abschnitt (9) mit dem Ende (3, 4) einen Raum (14) begrenzen, der von der äußeren Umgebung isoliert ist, wobei die Radnabe (10) eine elektrische Maschine (15) umfasst, die in dem Raum (14) untergebracht ist und einen Stator (15'), der integral mit dem festen Abschnitt (8) getragen wird, und einen Rotor (15"), der operativ mit dem beweglichen Abschnitt (9) verbunden ist, umfasst, wobei die Radnabe (10) ein Getriebe (16) umfasst, das in dem Raum (14) radial innerhalb des Rotors (15") untergebracht ist und den Rotor (15") mit dem beweglichen Abschnitt (19) verbindet, um die Drehzahl/das Drehmoment zwischen dem Rotor (15") und dem beweglichen Abschnitt (9) zu variieren,
wobei der bewegliche Abschnitt (9) einen Hauptabschnitt (9a), der operativ durch das Getriebe (16) mit dem Rotor (15) verbunden ist und in einer frei drehbaren Weise von dem Ende (3, 4) der Achse (2) getragen wird, und einen Verbindungsabschnitt (9c), der konfiguriert ist, um eine Verbindung radial innerhalb einer Scheibe einer Radfelge (30) des Fahrzeugs zu ermöglichen, umfasst,
wobei das Getriebe (16) ein erstes Zahnrad (21), das operativ mit dem Rotor (15) verbunden ist, ein zweites Zahnrad (22) und eine Vielzahl von Satelliten (23), die mit dem ersten und dem zweiten Zahnrad (21, 22) kämmen, umfasst, wobei die Vielzahl von Satelliten (23) über Stifte (24) mit einem Träger (25) verbunden ist,
**dadurch gekennzeichnet, dass** das zweite Zahnrad (22) konfiguriert ist, um starr von dem Ende (3, 4) der Achse (2) getragen zu werden, wobei der Träger (25) operativ mit dem beweglichen Abschnitt (9) verbunden ist und integral mit dem beweglichen Abschnitt (9) ist.

2. Radnabe nach Anspruch 1, wobei das Getriebe (16) einen Getriebezug umfasst.

3. Radnabe nach Anspruch 1 oder 2, wobei das Getriebe (16) einen Differenzialgetriebezug umfasst.

4. Radnabe nach einem der Ansprüche 1 bis 3, wobei der Rotor (15") mit dem Getriebe durch einen Rotorhalter (17) verbunden ist, der frei drehbar in Bezug auf den festen Abschnitt (8) und/oder das Ende (3, 4) der Achse (2) getragen wird.

5. Radnabe nach einem der vorhergehenden Ansprüche, umfassend ein Konditionierungssystem (40) für die elektrische Maschine (15).

6. Radnabe nach Anspruch 5, wobei das Konditionierungssystem (40) ein Fluidkonditionierungssystem ist und eine Vielzahl von Leitungen (41) neben dem festen Abschnitt (8) in der Nähe des Stators (15') umfasst, die konfiguriert sind, um den Fluss eines Konditionierungsfluids zu einem Wärmetauschersystem des Fahrzeugs zu ermöglichen.

7. Radnabe nach Anspruch 6, wobei die Leitungen (41) in den festen Abschnitt (8) integriert sind.

8. Radnabe nach Anspruch 6 oder 7, wobei die Leitungen (41) durch Nuten (42) gebildet sind, die auf einer äußeren Oberfläche des festen Abschnitts (8) hergestellt sind und von der äußeren Umgebung durch eine Abdeckung (43) begrenzt sind, die starr an dem festen Abschnitt (8) befestigt ist.

9. Radnabe nach einem der Ansprüche 6 bis 8, umfassend ein Paar von Verteilern (46), die jeweils fluidisch mit den Leitungen (41) verbunden sind, wobei die Verteiler (46) jeweils mit einer Zuführleitung (44) und einer Rückführleitung (45) verbunden sind, die fluidisch mit dem Wärmetauschersystem verbunden sind.

10. Radnabe nach einem der vorhergehenden Ansprüche, wobei der feste Abschnitt (8) eine Öffnung definiert, die konfiguriert ist, um es dem Stator (15') zu ermöglichen, in einer abgedichteten Weise mit einer elektrischen Leistungsquelle des Fahrzeugs durch elektrische Kabel (53) verbunden zu werden.

11. Radnabe nach den Ansprüchen 9 und 10, umfassend ein Kopfelement (52), das starr mit dem festen Abschnitt (8) verbunden ist, so dass es axial dem Endabschnitt (3, 4) der Achse (2) zugewandt ist, wobei das Kopfelement (52) mit dem festen Abschnitt (8) und dem Endabschnitt (3, 4) eine Kammer (51) definiert, die von der äußeren Umgebung und von dem Raum (14) isoliert ist, wobei die Kammer (51) die Zuführleitung (44) und die Rückführleitung (45) und die elektrischen Kabel (53) aufnimmt.

12. Achse (1), die sich entlang einer Längsachse (A) erstreckt und einen zentralen Abschnitt (2) und ein Paar von Endabschnitten (3, 4), die mit den Enden des zentralen Abschnitts (2) entlang der Achse (A) verbunden sind, und jeweilige Radnaben (10) nach einem der vorhergehenden Ansprüche, die jeweils von einem entsprechenden Endabschnitt (3, 4) getragen werden, umfasst.

13. Achse nach Anspruch 12, wobei der zentrale und der Endabschnitt (2, 3, 4) hohl sind und einen Raum (5) definieren, der durch Endöffnungen (6) entlang der Achse (A) zusammenhängend ist.

14. Achse nach Anspruch 13, wenn abhängig von Anspruch 11, wobei der Raum (5) fluidisch durch die Öffnungen (6) mit dem Raum (52) verbunden ist und den Durchgang der Zuführleitung (44) und der Rückführleitung (45) und der elektrischen Kabel (53) ermöglicht.

15. Achse nach Anspruch 14, wobei der zentrale Abschnitt (2) fluidische Verbinder (48) und elektrische Verbinder (54) definiert, die konfiguriert sind, um jeweils die Zuführleitung (44) und die Rückführleitung (45) und die elektrischen Kabel (53) mit dem Wärmetauschersystem und der elektrischen Leistungsquelle des Fahrzeugs zu verbinden.

16. Fahrzeug, umfassend eine Achse (1) nach einem der Ansprüche 11 bis 15.

17. Fahrzeug nach Anspruch 16, umfassend eine elektrische Leistungsquelle, die elektrisch durch elektrische Kabel (53) mit dem Stator (15') der elektrischen Maschine (15) der Radnabe (10) verbunden ist.

18. Fahrzeug nach Anspruch 16 oder 17, wenn abhängig von den Ansprüchen 6 bis 9, umfassend ein Wärmetauschersystem, das fluidisch mit dem Konditionierungssystem (40) der Radnabe (10) verbunden ist.

## Revendications

1. Moyeu (10) de roue pour un essieu (1) d'un véhicule lourd, ledit moyeu (10) de roue comprenant une partie fixe (8) configurée pour être solidarisée par une extrémité (3, 4) dudit essieu (1) et une partie mobile (9) configurée pour être portée de manière libre en rotation par ladite extrémité (3, 4) dudit essieu (1) et par rapport à ladite partie fixe (8), ladite partie fixe (8) et ladite partie mobile (9) délimitant avec ladite extrémité (3, 4) un espace (14) isolé de l'environnement extérieur, ledit moyeu (10) de roue comprenant une machine électrique (15) logée dans ledit espace (14) et comprenant un stator (15') faisant corps avec ladite partie fixe (8) et un rotor (15") relié opérationnellement à ladite partie mobile (9), ledit moyeu (10) de roue comprenant une transmission (16) logée dans ledit espace (14) radialement à l'intérieur dudit rotor (15") et reliant ledit rotor (15") à ladite partie mobile (19) de manière à faire varier la vitesse/le couple entre ledit rotor (15") et ladite partie mobile (9),
dans lequel ladite partie mobile (9) comprend une partie principale (9a) reliée opérationnellement par ladite transmission (16) audit rotor (15) et supportée de manière libre en rotation par ladite extrémité (3, 4) dudit essieu (2) et une partie de liaison (9c) configurée pour permettre une liaison de manière radiale à l'intérieur d'un disque d'une jante (30) de roue dudit véhicule
dans lequel ladite transmission (16) comprend une première roue dentée (21) reliée opérationnellement audit rotor (15), une seconde roue dentée (22) et une pluralité de satellites (23) s'engrenant avec lesdites première et seconde roues dentées (21, 22), ladite pluralité de satellites (23) étant reliés par l'intermédiaire d'ergots (24) à un support (25), **caractérisé en ce que** la seconde roue dentée (22) est configurée pour être solidarisée par ladite extrémité (3, 4) dudit essieu (2), le support (25) est relié opérationnellement à ladite partie mobile (9) et fait corps avec ladite partie mobile (9).

2. Moyeu de roue selon la revendication 1, dans lequel ladite transmission (16) comprend un train d'engrenages.

3. Moyeu de roue selon la revendication 1 ou 2, dans lequel ladite transmission (16) comprend un train d'engrenages différentiels.

4. Moyeu de roue selon l'une des revendications 1 à 3, dans lequel ledit rotor (15") est relié à ladite transmission par un élément de retenue (17) de rotor porté en rotation libre par rapport à ladite partie fixe (8) et/ou à ladite extrémité (3, 4) dudit essieu (2).

5. Moyeu de roue selon l'une des revendications précédentes, comprenant un système de conditionnement (40) pour ladite machine électrique (15).

6. Moyeu de roue selon la revendication 5, dans lequel ledit système de conditionnement (40) est un système de conditionnement par fluide et comprend une pluralité de conduits (41) adjacents à ladite partie fixe (8) à proximité dudit stator (15') configurés pour permettre l'écoulement d'un fluide de conditionnement vers un système échangeur de chaleur dudit véhicule.

7. Moyeu de roue selon la revendication 6, dans lequel lesdits conduits (41) sont intégrés dans ladite partie fixe (8) .

8. Moyeu de roue selon la revendication 6 ou 7, dans lequel lesdits conduits (41) sont formés au moyen de rainures (42) ménagées sur une surface externe de ladite partie fixe (8) et sont séparés de l'environnement extérieur par un couvercle (43) solidarisé à ladite partie fixe (8) .

9. Moyeu de roue selon l'une des revendications 6 à 8, comprenant une paire de collecteurs (46) reliés chacun fluidiquement auxdits conduits (41), lesdits collecteurs (46) étant respectivement reliés à une conduite de refoulement (44) et à une conduite de retour (45) fluidiquement reliées audit système échangeur de chaleur.

10. Moyeu de roue selon l'une des revendications précédentes, dans lequel ladite partie fixe (8) définit une ouverture configurée pour permettre de relier, de manière étanche, le stator (15') à une source d'alimentation électrique dudit véhicule au moyen de câbles électriques (53).

11. Moyeu de roue selon les revendications 9 et 10, comprenant un élément de tête (52) solidarisé à ladite partie fixe (8) de manière à faire face axialement à ladite partie d'extrémité (3, 4) dudit essieu (2), ledit élément de tête (52) définissant avec ladite partie fixe (8) et ladite partie d'extrémité (3, 4) une chambre (51) isolée de l'environnement extérieur et dudit espace (14), ladite chambre (51) logeant ladite conduite de refoulement (44), ladite conduite de retour (45) et lesdits câbles électriques (53).

12. Essieu (1) s'étendant le long d'un axe longitudinal (A) et comprenant une partie centrale (2) et une paire de parties d'extrémité (3, 4) reliées aux extrémités de ladite partie centrale (2) le long dudit axe (A) et des moyeux (10) de roue respectifs selon l'une des revendications précédentes portés chacun par une partie d'extrémité (3, 4) respective.

13. Essieu selon la revendication 12, dans lequel lesdites parties centrale et d'extrémité (2, 3, 4) sont creuses et définissent un espace (5) qui est contigu à travers des ouvertures d'extrémité (6) le long dudit axe (A).

14. Essieu selon la revendication 13, lorsqu'elle dépend de la revendication 11, dans lequel ledit espace (5) est relié fluidiquement par l'intermédiaire desdites ouvertures (6) audit espace (52) et permet le passage de ladite conduite de refoulement (44), de ladite conduite de retour (45) et desdits câbles électriques (53).

15. Essieu selon la revendication 14, dans lequel ladite partie centrale (2) définit des raccords fluidiques (48) et des connecteurs électriques (54) configurés pour relier, respectivement, ladite conduite de refoulement (44), ladite conduite de retour (45) et lesdits câbles électriques (53) audit système échangeur de chaleur et à ladite source d'alimentation électrique dudit véhicule.

16. Véhicule comprenant un essieu (1) selon l'une des revendications 11 à 15.

17. Véhicule selon la revendication 16, comprenant une source d'alimentation électrique reliée électriquement au moyen de câbles électriques (53) audit stator (15') de ladite machine électrique (15) dudit moyeu (10) de roue.

18. Véhicule selon la revendication 16 ou 17, lorsqu'elle dépend des revendications 6 à 9, comprenant un système échangeur de chaleur relié fluidiquement audit système de conditionnement (40) dudit moyeu (10) de roue.
